# EUROPÄISCHE PATENTANMELDUNG

(11) **EP 4 342 569 A1**
(43) Veröffentlichungstag der Anmeldung: **27.03.2024**
(21) Anmeldenummer: 23197865.1
(22) Anmeldetag: 18.09.2023
(51) Int. Cl.: B01D 53/02

(54) **ADSORBATVERDÜNNUNG**

(30) Priorität: 20.09.2022 DE 102022124106
(71) Anmelder: Vaillant GmbH, 42859 Remscheid NRW (DE)
(72) Erfinder: Badenhop, Thomas, 42499 Hückeswagen (DE); Salg, Frank, 42897 Remscheid (DE); Spahn, Hans-Josef, 40699 Erkrath (DE); Forner, Pascal, 42857 Remscheid (DE); Sonner, Christian, 42859 Remscheid (DE)
(74) Vertreter: Popp, Carsten

(57) **Zusammenfassung**

Verfahren zur Herstellung der Transportfähigkeit eines Adsorbates, welches eine Kontamination aus einer Kältemittelleckage enthält und einem Adsorber entstammt, der Adsorber aufweisend eine durchströmbare Adsorbensschüttung, einen Gaseinlass und einen Gasauslass, am Gaseinlass oder am Gasauslass eine gasdurchlässige Rückhalteeinrichtung für Adsorbensmaterial, wobei der Adsorber geöffnet werden kann, mindestens ein verschließbarer Transportbehälter zur Verfügung gestellt wird, der teilweise mit Adsorbens gefüllt ist, das Adsorbat wenigstens teilweise in diesen Transportbehälter gefüllt wird, und eine gasförmige Verbindung zu dem Adsorbens im Transportbehälter hergestellt wird und der Transportbehälter verschlossen wird. Während des Umfüllens soll gekühlt werden. Das Adsorbat kann dann gefahrlos abtransportiert werden.

## Beschreibung

Die Erfindung betrifft die Behandlung eines Adsorbers mit einem durchströmbaren, beladenden Adsorptionsmittel, wobei die Beladung des Adsorptionsmittels aus einem Arbeitsfluid besteht, welches zuvor leckagebedingt aus einer Kältemaschine ausgetreten und vom Adsorptionsmittel des Adsorbers adsorbiert worden ist. Entsprechend üblicher Terminologie ist dabei das Adsorbens oder Adsorptionsmittel der Festkörper, an dessen Oberfläche die Adsorption stattfindet, das Adsorptiv der zu adsorbierende Stoff vor seiner Adsorption, hier also das ausgetretene Kältemittel, das Adsorbat das Adsorptiv nach vollzogener Adsorption und das Desorbat das durch Desorption wieder freigesetzte Adsorbat.

Das Adsorptionsmittel kann dabei als Schüttung eingesetzt werden, wobei die Schüttung aus Formkörpern oder gebrochenen Stücken besteht, oder es kann aus porösen Schaumstoffen oder Wabenkörpern bestehen, die mit Aktivkohle belegt sind. Die Aktivkohle kann beispielsweise entsprechend der EP 3 160 639 B1 aus Vinylidenchloridcopolymer hergestellt werden.

Der Adsorber kann dabei dem Stand der Technik entsprechend entweder innerhalb eines Gehäuses einer Kältemaschine oder Wärmepumpe oder außerhalb angeordnet sein, wobei es vorliegend nur um außen angeordnete Adsorber geht. Die zum Einsatz kommenden thermodynamischen Kreisprozesse sind seit langem bekannt, ebenso die Sicherheitsprobleme, die bei der Verwendung geeigneter Arbeitsfluide entstehen können. Abgesehen von Wasser sind die bekanntesten damaligen Arbeitsfluide brennbar und giftig. Sie führten im vergangenen Jahrhundert zur Entwicklung der Sicherheitskältemittel, die aus fluorierten Kohlenwasserstoffen FKW bestanden. Es zeigte sich jedoch, dass diese Sicherheitskältemittel zur Klimaerwärmung führen und dass ihre sicherheitstechnische Unbedenklichkeit zu konstruktiven Unachtsamkeiten führte. Bis zu 70 % des Umsatzes an FKW entfiel auf den Nachfüllbedarf undichter Anlagen und deren Leckageverluste, der hingenommen wurde, solange dies im Einzelfall als wirtschaftlich vertretbar empfunden wurde und Bedarf an Ersatzbeschaffung förderte.

Der Einsatz dieser Kältemittel wurde aus diesem Grund Restriktionen unterworfen, in der Europäischen Union beispielsweise durch die F-Gas-Verordnung (EU) 517/2014. Derartige Emissionen dürfen nicht mehr in die Umwelt gelangen, sie müssen sicher aufgefangen werden und entweder entsorgt oder recycliert werden, jeweils ohne Verluste.

Aber auch die klimafreundlicheren Kältemittel sind problematisch. Die Klimafreundlichkeit leitet sich zum einen aus den besonders hohen Wirkungsgraden, zum anderen aus dem geringen GWP (Global Warming Potential) her, beispielsweise hat R290 nur einen GWP-Wert von 3, es sind aber COP-Werte (Coefficient of Performance) von 3,5 bis 4 erreichbar, ähnliche Werte sind mit R600a und R1270 erreichbar. Nachteilig ist aber die hohe Entzündlichkeit. Auch Kompromisse werden versucht, etwa mit R32, R443a oder R441a, bei denen ein GWP von einigen Hundert und eine etwas verminderte Brennbarkeit angegeben wird, vor allem aber ein direkter Ersatz vorhandener Anlagen erreicht werden soll.

Zur sicheren Abscheidung bei einer leckagebedingten Freisetzung werden inzwischen oftmals Adsorber verwendet. Beispiele hierfür sind in der EP 3 486 582 A1, der EP 3 772 369 A1, der EP 3 693 683 A1, der EP 3 771 905 A1, sowie vielen weiteren Druckschriften beschrieben. Auch für Gefrierkältemaschinen ist aus der JP H11 351 7811 A bekannt, im Falle einer erkannten Leckage den Kältekreis in einen Behälter zu entleeren, der ein Adsorptionsmittel enthält. Das bereits durch die Leckage entwichene Kältemittel ist so aber nicht zurückgewinnbar.

Für die Zwecke der Abscheidung spielt es meist keine Rolle, ob der Adsorber in das ansonsten dichte Gehäuse einer Kältemaschine integriert ist oder ob er separat außerhalb steht. Ebenfalls variabel ist die Option, die Durchströmung des Adsorbers erst nach einer erkannten Leckage zu starten oder für eine permanente Durchströmung zu sorgen.

Auch ist es möglich einen Adsorber lediglich bedarfsweise mit dem Gehäuse einer Kältemaschine oder Wärmepumpe zu verbinden. Wesentlich in diesem Zusammenhang ist, dass der Adsorber an seinem Einlass zum Innenraum des Gehäuses offen ist oder auf ein Signal hin geöffnet werden kann, ferner, dass er zum Außenbereich des Gehäuses hin offen oder auf ein Signal hin zu öffnen ist. Tritt im Innenraum des Gehäuses eine Leckage auf, bewirkt der sich einstellende Überdruck, dass mit Arbeitsfluid kontaminierte Luft in den Adsorber eintritt, die Kontamination im Adsorptionsmittel adsorbiert wird und gereinigte Luft in die Umgebung geleitet wird. Diese Umgebung ist in der Regel der Innenraum eines Gebäudes.

Solche Leckagefälle sind zwar ausgesprochen selten, könnten aber verheerende Folgen haben, wenn das Arbeitsfluid entzündlich ist und wenn nicht ausreichend Vorsorge getroffen wird. Aus diesem Grund werden solche Adsorber üblicherweise so ausgelegt, dass sie das gesamte Inventar an Arbeitsfluid aufnehmen könnten. Aber auch wenn das Arbeitsfluid nicht entzündlich ist, dafür aber bei seiner Freisetzung klimaschädliche oder ozonabbauende Wirkung hat, ist das Auffangen der Kontamination erforderlich. Auch dies kann mit geeigneten Adsorptionsmitteln sicher durchgeführt werden.

Eine Aktivkohleschüttung als Adsorbens wird beispielsweise eingesetzt als Sicherheit vor einer Kontamination von R290 in Gehäusen, in denen ein als Kältemittel wirkendes Arbeitsfluid in einem thermodynamischen Kreisprozess, wie zum Beispiel dem Clausius-Rankine-Kreisprozess, geführt wird. Vorwiegend sind dies Wärmepumpen, Klimaanlagen und Kühlgeräte, wie sie in Wohngebäuden und anderen Einrichtungen, wie Fahrzeugen, Kühlhäusern, medizinischen Apparaten und Industrieanlagen gebräuchlich sind. Die auftretenden Probleme bei der Sicherheitsauslegung solcher Anlagen werden in der WO 2015/032905 A1 anschaulich beschrieben. So liegt die untere Zündgrenze von Propan, welches den Hauptbestandteil des Arbeitsfluids R290 bildet, als Arbeitsfluid etwa bei 1,7 Volumenprozent in Luft, was 38 g/m³ in Luft entspricht.

Die DE 10 2011 116 863 A1 beschreibt ein Verfahren zur Sicherung einer Vorrichtung für einen thermodynamischen Kreisprozess, welche mit einem Prozessfluid betrieben wird, das mindesten eine umweltgefährliche, giftige und/oder entzündliche Substanz enthält oder daraus besteht. Im Falle einer Leckage in der Vorrichtung für einen thermodynamischen Kreisprozess wird ein Adsorptionsmittel mit dem Prozessfluid, insbesondere Ammoniak, Propan oder Propen, in Kontakt gebracht und die Substanz durch das Adsorptionsmittel selektiv gebunden. Das Adsorptionsmittel wird nach Gebrauch regeneriert. Als Adsorptionsmittel wird unter anderen vorgeschlagen, das Adsorptionsmittel kann in Form einer Schüttung, eines Formkörpers, eines Anstrichs, eines Sprühfilms oder einer Beschichtung ausgestattet sein. Die Trägerstruktur des Formkörpers kann aus Mikrostruktur, Lamellenstruktur, Rohrbündel, Rohrregister und Blech bestehen und muss mechanisch stabil sowie stark oberflächenvergrößernd sein. Eine Umwälzung der potenziell kontaminierten Luft erfolgt üblicherweise kontinuierlich, kann aber auch durch einen Sensor initiiert werden, der die Lüftung nach Erreichen eines Schwellenwerts oder bei einem erkannten Havariefall einschaltet. Die Adsorption kann innerhalb oder außerhalb eines geschlossenen Raumes durchgeführt werden.

Die DE 195 25 064 C1 beschreibt eine Kältemaschine mit einem gasdicht ausgebildeten Gehäuse, welches alle kältemittelführenden Komponenten der Maschine aufnimmt, ein das Innere des gasdichten Gehäuses mit einem Auslass verbindender Raum vorgesehen ist, und der Raum mit einem das Kältemittel sorbierenden Stoff gefüllt ist. Die Menge des sorbierenden Stoffes wird dabei so dimensioniert, dass die gesamte Menge an eventuell austretendem Kältemittel aufgenommen und von der Umwelt ferngehalten werden kann. Der mit dem sorbierenden Stoff gefüllte Raum ist zur Umgebung hin offen. Bei Kältemitteln, die schwerer als Luft sind, ist der Raum nach unten hin offen, bei solchen, die leichter sind, ist er nach oben hin offen, so dass ein Fördergebläse nicht erforderlich ist. Das Sorptionsmittel wird in das Gehäuse eingebracht und umschließt die Kältemaschine bzw. die kältemittelführenden Einrichtungen vollständig. Auf seinem Weg nach außen sind Schikanen vorgesehen, die Kurzschlussströmungen verhindern und entweichendes Gas durch das Sorptionsmittel zwingen. Auch eine doppelwandige Ausführungsform, bei der das Sorptionsmittel im Doppelmantel angeordnet ist, ist möglich. Am Ausgang des mit dem sorbierenden Stoffes gefüllten Raumes zur Umgebung hin kann eine Messeinrichtung für Kältemittel vorgesehen werden.

Sofern der Kälteprozess in einem ihn umgebenden, hermetisch abgeschlossenen, ansonsten aber luftgefüllten Raum mit dem Arbeitsfluid R290 durchgeführt wird, stellt sich das Problem der Erkennung einer kritischen, explosiven Situation nach einer Störung, bei der das Arbeitsfluid in diesen hermetisch abgeschlossenen Raum austritt. Elektrische Sensoren zur Erkennung kritischer Konzentrationen sind nur schwierig explosionsgeschützt auszuführen, weswegen gerade die R290-Erkennung durch die Sensoren selbst das Explosionsrisiko erheblich verschärft, ausgenommen hiervon sind Infrarotsensoren. R290 ist auch giftig, bei Inhalation oberhalb einer Konzentration von ca. 2 g/m³ stellen sich narkotische Effekte, Kopfschmerzen und Übelkeit ein. Dies betrifft Personen, die ein erkanntes Problem vor Ort lösen sollen, noch bevor Explosionsgefahr entsteht. Es betrifft aber auch das Personal, welches die Leckage reparieren und mit dem Adsorbat umgehen sollen.

Apparativ üblich sind durchströmte Kartuschen sowie Festbetten mit Rückhaltevorrichtungen, die Aktivkohle oder andere Adsorptionsmittel in diversen Formen enthalten. Die Auslegung solcher Apparate erfolgt, indem man die Beladungskapazität der Aktivkohle für jeden der abzuscheidenden Stoffe bestimmt, wobei die Beladungskapazität in der Regel stark temperaturabhängig ist, und die Durchströmungsmenge bestimmt. Hierbei ergibt sich im Idealfall ein Adsorptionsgleichgewicht und eine Durchbruchsfront zwischen beladenem und noch unbeladenem Adsorbens. Das gilt vor allem für Abscheidungsvorgänge aus der Gasphase, wie bei leckagebedingt ausgetretenem Kältemittel. Meistens ist nach einem solchen Vorgang aber nicht genau bekannt, wie hoch die Beladung tatsächlich ist. Für den schlimmsten Fall kann man annehmen, dass sich das gesamte Kältemittel aus der ursprünglichen Füllung des Kältekreises auf dem Adsorbat befindet.

Für die nachfolgend anstehenden Maßnahmen der Behandlung des Adsorbates ist man mit dieser Maximalannahme auf der sicheren Seite. Allerdings ergibt sich daraus ein Folgeproblem: Das beladene Adsorbat darf im Gegensatz zu unbeladenem Adsorbens nicht transportiert werden, weil es als Gefahrgut gilt. Beispielsweise schreiben die ADR-Vorschriften (ADR: Accord européen relatif au Transport international des marchandises Dangereuses par Route) vor, dass zunächst die Gefährlichkeit des adsorbierten Kältemittels zu klassifizieren ist. Beim Kältemittel R290 gilt dann beispielsweise, dass der Transport in einem Druckbehälter zu erfolgen hat, der dauerhaft 5 bar Überdruck auszuhalten hat. Außerdem dürfen höchstens 0,42 kg Kältemittel je Liter Sorptionsmittel und nicht mehr als 5 kg absolut je Transporteinheit transportiert werden. Bei anderen Kältemitteln gilt entsprechendes.

Die Aufgabe der Erfindung ist daher, ein Verfahren bereitzustellen, welches in der Lage ist, das Adsorbat transportfähig zu machen. Das Adsorbat soll ein adsorbiertes Kältemittel wie z.B. R290 und gegebenenfalls weitere Kontaminanten enthalten können.

Die Erfindung löst diese Aufgabe durch ein Verfahren zur Transportvorbereitung eines kontaminierten Adsorbates aus einem Adsorber, der Adsorber aufweisend eine durchströmbare Adsorbensschüttung, einen Gaseinlass und einen Gasauslass, am Gaseinlass oder am Gasauslass eine gasdurchlässige Rückhalteeinrichtung für Adsorbensmaterial, wobei der Adsorber geöffnet werden kann, indem mindestens ein verschließbarer Transportbehälter zur Verfügung gestellt wird, der teilweise mit Adsorbens gefüllt ist, und das Adsorbat wenigstens teilweise in diesen Transportbehälter gefüllt wird und eine gasförmige Verbindung zu dem Adsorbens im Transportbehälter hergestellt wird.

In einer Ausgestaltung des Verfahrens wird vorgesehen, dass das Adsorbat mit dem Adsorbens gleichmäßig vermischt wird. In einer anderen Ausgestaltung wird vorgesehen, dass das Adsorbat inmitten des Adsorbens hineingeschüttet und anschließend mit Adsorbens bedeckt wird und damit innerhalb des Transportbehälters vollständig umschlossen ist. Das Adsorbat kann auch mitsamt dem Adsorber in den Transportbehälter eingefüllt und anschließend mit Adsorbens bedeckt werden.

Hierbei wird darauf geachtet, dass die Menge des Adsorbates die maximale zulässige Menge des Kältemittels nicht überschreitet und die Gesamtmenge aus Adsorbat und Adsorbens unterhalb der Gewichtsgrenzen für Transporte gehalten wird. Gegebenenfalls sind mehrere Transportbehälter zu verwenden.

Beim Umfüllen durch Schütten kann Adsorptiv ausdünsten, da in der Umgebung des Umfüllens der Partialgegendruck für das Adsorptiv fehlt. Es kann also erforderlich werden, dagegen Maßnahmen zu ergreifen in Fällen, wo durch solches Ausdünsten ein zündfähiges Gemisch gebildet werden könnte.

In weiteren Ausgestaltungen des Verfahrens ist daher vorgesehen, dass das Adsorbens im Transportbehälter in gekühlter Form eingefüllt wird. Durch diese Kühlung wird das Adsorptiv besser gebunden. Die Kühlung des Adsorbens kann in einer üblichen Gefriertruhe erfolgen, wobei eine Temperatur zwischen minus 26 und minus 32 Grad erreicht wird. In einer weiteren Ausgestaltung wird auch der Transportbehälter selbst zusammen mit dem Adsorbens gekühlt. In einer weiteren Ausgestaltung wird der Adsorber vor dem Umfüllen des Adsorbates ebenfalls gekühlt, wobei je nach Form und Anschlüssen eine entsprechend geformte Kühlweste zur Anwendung kommt. Solche Kühlwesten mit bestückbaren Kühlpads sind im Sporthandel ebenfalls sehr gebräuchlich und günstig erhältlich. Auch diese Kühlhilfen können in einer üblichen Gefriertruhe für den Einsatz vorbereitet werden. Beim manuellen Umfüllen wird vorzugsweise ein gekühlter Fülltrichter verwendet und die Kühlweste wird bis über die Öffnung des Transportbehälters gezogen. Sie bildet für austretende Dämpfe eine Kältefallle.

Bei Temperaturen von unter Minus 20 Grad Celsius ist R290 flüssig und der Dampfdruck ist so niedrig, dass ein zündfähiges Gemisch nicht entsteht. Auf diese Weise ist ein Umfüllen gefahrlos möglich.

Für die Regeneration des Adsorbates ist es günstig, wenn Adsorbens und Adsorbat aus dem gleichen Material bestehen, da sie dann gemeinsam verarbeitet werden können. Daher ist in einer Ausgestaltung vorgesehen, dass das Adsorbens aus dem gleichen Material wie das Adsorbat gewählt wird. Eine bevorzugte Verwendung ist die für Aktivkohle als Adsorbens und R290 als Adsorptiv, es sind jedoch auch alle anderen bekannten Adsorbenzien oder Adsorptive mit Gefahrenpotenzial so transportierbar zu machen.

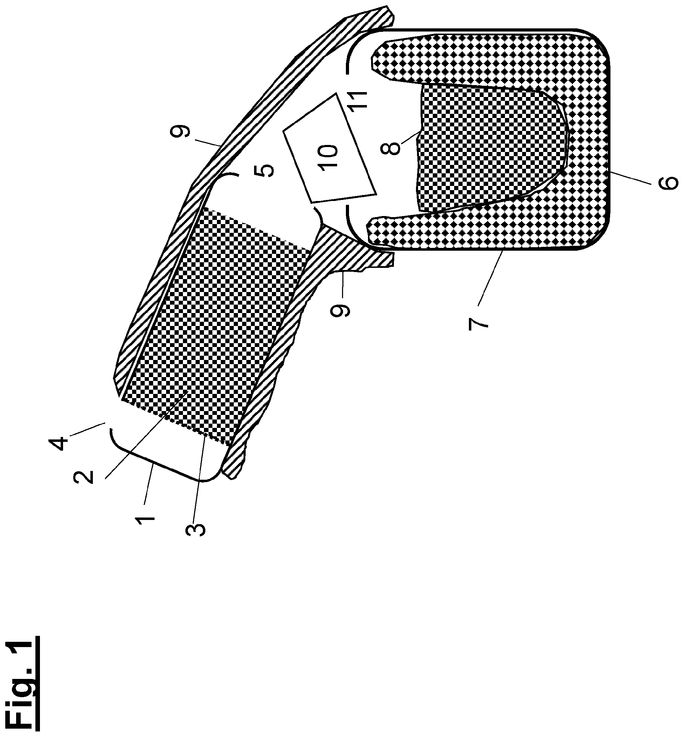

Die Erfindung wird nachfolgend anhand einer Prinzipskizze näher erläutert. Hierbei zeigt Fig. 1 das Umfüllen des Adsorbates aus dem Adsorber in einen mit etwas Adsorbens gefüllten Transportbehälter. Fig. 1 zeigt einen oben geöffneten Adsorber 1, der eine Adsorbatschüttung 2, einen gasdurchlässigen Korb 3 am Gaseinlass4 und eine Öffnung 5 am Gasauslass hat. Der Transportbehälter 6 ist mit Adsorbens 7 gefüllt. Nach dem Einfüllen befindet sich das Adsorbat 8 im Transportbehälter. Während des Umfüllens wird der Adsorber 1 von der Kühlweste 9 umhüllt, die auch eine Einfüllhilfe 10 und die Öffnung 11 des Transportbehälters 6 mitumschließt.

### Bezugszeichenliste

- 1:: Adsorber
- 2:: Adsorbatschüttung
- 3:: Korb
- 4:: Gaseinlass
- 5:: Öffnung
- 6:: Transportbehälter
- 7:: Adsorbens
- 8:: Adsorbat
- 9:: Kühlweste
- 10:: Einfüllhilfe
- 11:: Öffnung des Transportbehälters

## Patentansprüche

1. Verfahren zur Herstellung der Transportfähigkeit eines Adsorbates, welches eine Kontamination aus einer Kältemittelleckage enthält und einem Adsorber entstammt, der Adsorber aufweisend ein durchströmbares Adsorptionsmittel, einen Gaseinlass und einen Gasauslass, am Gaseinlass oder am Gasauslass eine gasdurchlässige Rückhalteeinrichtung für Adsorptionsmittel, wobei der Adsorber geöffnet werden kann, **dadurch gekennzeichnet, dass**
- mindestens ein verschließbarer Transportbehälter zur Verfügung gestellt wird, der teilweise mit Adsorbens gefüllt ist,
- das Adsorbat wenigstens teilweise in diesen Transportbehälter gefüllt wird,
- und eine gasförmige Verbindung zu dem Adsorbens im Transportbehälter hergestellt wird
- und der Transportbehälter verschlossen wird.

2. Verfahren nach Anspruch 1, **dadurch gekennzeichnet, dass** das Adsorbat mit dem Adsorbens gleichmäßig vermischt wird.

3. Verfahren nach Anspruch 1, **dadurch gekennzeichnet, dass** das Adsorbat inmitten des Adsorbens hineingeschüttet und anschließend mit Adsorbens bedeckt wird und damit innerhalb des Transportbehälters vollständig umschlossen ist.

4. Verfahren nach Anspruch 1, **dadurch gekennzeichnet, dass** das Adsorbat mitsamt des Adsorbers inmitten des Adsorbens hineingeschüttet und anschließend mit Adsorbens bedeckt wird und damit innerhalb des Transportbehälters vollständig umschlossen ist.

5. Verfahren nach einem der Ansprüche 1 bis 4, **dadurch gekennzeichnet, dass** das Adsorbens im Transportbehälter in gekühlter Form eingefüllt wird.

6. Verfahren nach einem der Ansprüche 1 bis 5, **dadurch gekennzeichnet, dass** der Transportbehälter zusammen mit dem Adsorbens gekühlt wird.

7. Verfahren nach einem der Ansprüche 1 bis 6, **dadurch gekennzeichnet, dass** der Adsorber mit dem Adsorbat vor dem Umfüllen gekühlt wird.

8. Verfahren nach einem der Ansprüche 1 bis 7, **dadurch gekennzeichnet, dass** der Adsorber mit dem Adsorbat mittels einer Kühlweste gekühlt wird, die auch über die Einfüllhilfe bis zum Transportbehälter gezogen wird.

9. Verfahren nach einem der Ansprüche 5 bis 8, **dadurch gekennzeichnet, dass** die Kühlung auf eine Temperatur von unter minus 20 Grad Celsius erfolgt.

10. Verfahren nach Anspruch 9, **dadurch gekennzeichnet, dass** die Kühltemperatur zwischen minus 26 und minus 32 Grad Celsius gewählt wird.

11. Verwendung nach einem der vorangegangenen Ansprüche 1 bis 10, **dadurch gekennzeichnet, dass** das Adsorbens aus demselben Material wie das Adsorbat gewählt ist.

12. Verwendung nach einem der vorangegangenen Ansprüche 1 bis 10 **dadurch gekennzeichnet, dass** das Adsorbens Aktivkohle und das Adsorptiv R290 ist.
